# EUROPEAN PATENT SPECIFICATION

(11) **EP 1 303 391 B1**
(45) Date of publication and mention of the grant of the patent: **26.04.2017**
(21) Application number: 01967851.5
(22) Date of filing: 20.07.2001
(51) Int. Cl.: B29C 47/02, B29C 47/12

(54) **METHOD AND DEVICE FOR MANUFACTURING INSULATED TUBE**
VERFAHREN UND VORRICHTUNG ZUR HERSTELLUNG EINES TEMPERATURISOLIERTEN LEITUNGSROHRES
PROCEDE ET DISPOSITIF DE FABRICATION D'UN TUBE CALORIFUGE

(30) Priority: 20.07.2000 NL 1015760
(43) Date of publication of application: 23.04.2003
(73) Proprietor: Thermaflex International Holding B.V., 5145 NS Waalwijk (NL)
(72) Inventor: MAAS, Cornelis, Henricus, Johannes, NL-5145 NS Waalwijk (NL); BAARS, Gerrit-Jan, NL-5145 NS Waalwijk (NL); DE BELL, Humphrey, Reginald, NL-5145 NS Waalwijk (NL)
(74) Representative: Geurts, Franciscus Antonius
(86) International application number: PCT/NL2001/000562
(87) International publication number: WO 2002/007948

(56) References cited:
- EP-A- 0 897 788
- WO-A-00/35657
- DE-A- 3 506 144
- JP-A- 59 028 033
- US-A- 4 844 762
- US-A- 4 929 409

## Description

The invention relates to a method for manufacturing an insulated tube or pipe as described in the preamble of claim 1. The invention further relates to a device for it, as well as to an insulated tube or pipe itself.

Insulated tubes or pipes are used for conducting cooling medium, such as in cooling plants, and heating medium, such as in central heating systems, or both, in air treatment systems. The pipe itself is made of copper or synthetic material. The insulation is provided by an insulation casing, for instance polyethylene foam, to be arranged around the pipe, on which casing a protective outer layer of synthetic foil may have been arranged.

The insulation casings are supplied in lengths or as rolls, and are arranged around the pipes at the location of the installation, which may take place by axially sliding or by sliding the casing from aside around the pipe. A drawback of this is that the supply of both parts takes place separately, and that a lot of air and therefore unused volume is carried along with the casings. The arrangement of the casings requires a lot of effort, in which it cannot be guaranteed that the casing in longitudinal direction is perfectly contiguous. Furthermore it is a drawback that at the location two stocks have to be kept. That also holds good for the supplier, who moreover has to purchase from two plants, namely the plant for pipes and the plant for casings.

US 4.929.409 relates to a method of producing an assembly of a pipe, a foam jacket and a protective sheath. The jacket is supplied on a roll and subsequently arranged around the pipe. The combined pipe/casing is then passed through an angle extruder where the sheath is extruded. The foam casing is fed through a metal sheet sleeve having a conical end portion that has a diameter smaller than the diameter of the foam jacket. The foam jacket outer areas are compressed and slide past the stationary conical end portion, due to which these areas may be damaged.
US 4.844.762 discloses a method of producing an assembly of a pipe and a foam jacket around the pipe according to the preamble of claim 1. The combined pipe and foam jacket is preferably past through a tunneloven before a protective outer layer is extruded onto the foam jacket. It is an object of the invention to improve on this. To that end, from one aspect, the invention provides a method for manufacturing an assembly of a heat-insulation tube and at least one pipe accommodated therein for transport of fluid, according to claim 1.
Thus in a continuous, single line operation, a complete, assembled insulated cooling/heating pipe is provided, in a simple, small space requiring manner, which pipe can be transported to the location of installation, and can be stored and managed there as if it were pre-assembled.
Preferably the assembly pipe/casing/outer layer is rolled up in a continuous movement and is stored as a roll.

Preferably the casing, made of a foamed polyolefin, provided with a longitudinal cut, is arranged around the pipe from aside. During transport of the pipe the casing, after having been extruded, is placed around the pipe, by inserting, as seen relatively, the pipe into the casing through the longitudinal cut.
After that the casing can, in particular when it is not yet provided with the outer layer, be closed at the location of the longitudinal seam, for instance by fusing, after which the outer layer can be extruded on the thus obtained continuous circumference.

In a further development of this method , which is not part of the invention, the casing prior to being arranged around the casing is already provided with the outer layer by means of coextrusion. The casing is then efficiently closed by fusing together its edges that bound the interruption. The outer layer then also keeps the casing itself closed, without the casing itself having to be sealed at the location of the longitudinal seam.
This preferably is done by subjecting the edges of the outer layer in tangential direction to a heated agent for the fusing process and then urging them against each other and subsequently cooling them down in order to solidify/cure. Preferably the edges are heated with a gas, particularly heated air.

It is preferred here that the outer layer is formed by a smooth coating so that the edges meet each other in a tangential plane and the heating can simply be adjusted to said plane.

In said uses it is preferred that the outer layer of the coating is of polyolefin, which is profoundly connected to the casing over the entire surface.

According to the invention however, the outer layer is formed with circumferential ribs. Such profiled outer layers are known per se as bendable, rather rigid (manufactured from a thermosetting synthetic material) sleeves for pipes for fluid of for instance floor heatings or air-conditioning systems. In those uses the pipe lies free in the air space between the pipe and the sleeve a chimney effect may occur, which reduces the efficiency. Furthermore it is disadvantageous that the pipe under the influence of gravity will lie eccentrically in the sleeve.

With the method according to the invention a pipe assembly is obtained, in which the pipe is kept in its place within the ribbed outer layer by the insulation casing, which casing also prevents a chimney effect. It is preferred here that casing is centrically arranged around the pipe. The ribs ensure anchoring when accommodated in a concrete layer, so that when necessary -in case of a leak to be tracked down or to be closed- the pipes can be pulled out, without the outer layer coming along. The circumferential ribs are formed in the outer layer after arranging the outer layer. This takes place by means of rib formers radially engaging the arranged casing, preferably two rib formers that diametrically opposite each other engage and deform the outer layer. The deformation of the outer layer here takes place when it is supported by the casing and the pipe, during continuous transport.
Another object against the known ribbed sleeves is that the deformability of the sleeves is limited, which under circumstances may render installation difficult. To improve on this it is provided according to the invention that the outer layer is arranged abutting and detached from the casing and the circumferential ribs and the remaining portion of the outer layer situated in between them is formed in such a manner that it can be axially pushed in. This not only render axial shortening or lengthening possible, but also improves bendability. The deformation may here occur at the location of the folding lines in the outer layer. Undesired pleating (in bends situated in view) is prevented in this way. It is preferred here that the outer layer is made of a thermoplastic material, particularly polyolefin, for instance polyethene.
It is noted that an assembled line for air conditioning systems is known, comprising a copper fluid line, a polyethene foam insulation casing surrounding it, and a thin layer of polyethene surrounding that, which layer is provided with pyramid-like profilings. The outer layer is brought to the casing in the form of a flat strip, is wrapped around the casing under the influence of heat and is subsequently sealed in a mould. After that the pipe is axially inserted into the casing, which is kept under pressure in order to increase the diameter.
From another aspect the invention provides an assembly for carrying out a method according to the invention, according to claim 7.

Preferably the closing means are provided with means for heating the longitudinal head edges of the outer layer and with means for tangentially bringing the longitudinal edges against each other. The heating means preferably comprise nozzles that can be placed between the longitudinal edges and are oriented thereto, to which nozzles one or more lines for supply of heated fluid -particularly air- have been connected. In that way the heat necessary for the welding of the edges is supplied as directed and local as possible.
Preferably the nozzles have been arranged on a carrier for them, in which the carrier is drivable for movement of the nozzles in process direction, so that the effectiveness is maximal. A simple arrangement is one in which the carrier is a circumferentially driven carrier, preferably a rotatingly driven disk.

Preferably a stop is also provided, such as a foot for preventing that the carrier, particularly the rotating disk, contacts the pipe.
Near the heating means, means are positioned for cooling the parts of the assembly that contact the portions of the pipe/casing/outer layer situated outside the contact area of the longitudinal edges, or are able to transfer heat to these portions in another way, in order not to let the heat supplied by the heating means exert an unwanted influence on the other portions of the casing and the outer layer.

From yet another aspect an assembly comprises a stock of pipe, first transport means for transporting the pipe from the stock in process direction to subsequent processing stations, an extruder for an insulation casing, second transport means for leading the insulation casing from the extruder to the pipe downstream of its stock, means for arranging the insulation casing around the pipe during continuous transport of both, means for arranging an outer layer around the insulation casing in an abutting, detached manner, means for arranging circumferential ribs in the outer layer and means for taking up the assembled pipe thus obtained on a supply roll. According to the invention, means for arranging the circumferential ribs comprise two or more rib formers radially engaging the outer layer, which rib formers are preferably formed by shaping bands circumferentially driven along with the outer layer. Advantageously the rib formers are positioned diametrically opposite each other to engage and deform the outer layer over the entire circumference in a reliable and stable manner.

A roll of assembled pipe for temperature conditioning, comprising a pipe for conducting fluid, a casing of insulation material surrounding it and a foil surrounding it.

A roll of assembled pipe for temperature conditioning, comprising a pipe for conducting fluid, a casing of insulation material surrounding it and a foil surrounding it, in which the foil is provided with a longitudinal seal and the casing under it is interrupted.

A roll of assembled pipe for temperature conditioning, comprising a pipe for conducting fluid, a casing of insulation material surrounding it and a sleeve provided with circum-ferential ribs surrounding it in an abutting and detached manner. Preferably the sleeve can be pressed in/pulled out axially and/or is made of thermoplastic material.
The invention will be elucidated on the basis of a number of exemplary embodiments shown in the attached drawings, in which:
Figure 1 schematically shows an arrangement with which according to the invention an assembled insulated pipe can be manufactured;
Figure 2 is a part of the arrangement according to figure 1, for making a ribbed tube;
Figures 3A and 38 show a cross-section and a longitudinal section, respectively, of an assembled heat-insulating tube made with the arrangement according to figure 1;
Figures 4A and 4B show a side view and a cross-section, respectively, of a part for an alternative arrangement for making an assembled heat-insulating tube not being part of the invention; and
Figure 5 is a cross-section of an assembled heat-insulating tube made by means of the part of figures 4A and 4B.
The arrangement 1 in figure 1 is located on a limited space. It comprises a holder 2 with a supply roll 3 of a pipe 6 made of copper or a hard synthetic material, which supply roll can be unwound in the direction of A to be subsequently transported further in the process in the direction B.
Adjacent to it an extruder 3 is positioned having an extruder nozzle 5, from which a insulating casing 7 made of synthetic insulating material is extruded in the direction C.
The control panel 4 is provided for operating the entire arrangement 1.
Downstream of the holder 2 a joining station 30 is situated having a stretching device 8 and downstream of it a pipe feed device 9 provided with driven rollers for the pipe 6, and parallel to it, also in the station 30, a guiding device 10 for the casing 7, and an opening means 11 to open up the casing 7 in longitudinal direction. At extrusion from the nozzle 5 the casing 7 can already be provided with a longitudinal cut, but may also be provided with it at the location of the guiding means 10 or the opening means 11.

Downstream of it orienting means 12 is situated, where the casing 7 kept open is pushed sidewards onto the pipe 6 kept stretched. This takes place during continuous transport of the pipe 6 in the direction B and the casing 7 in the direction C.

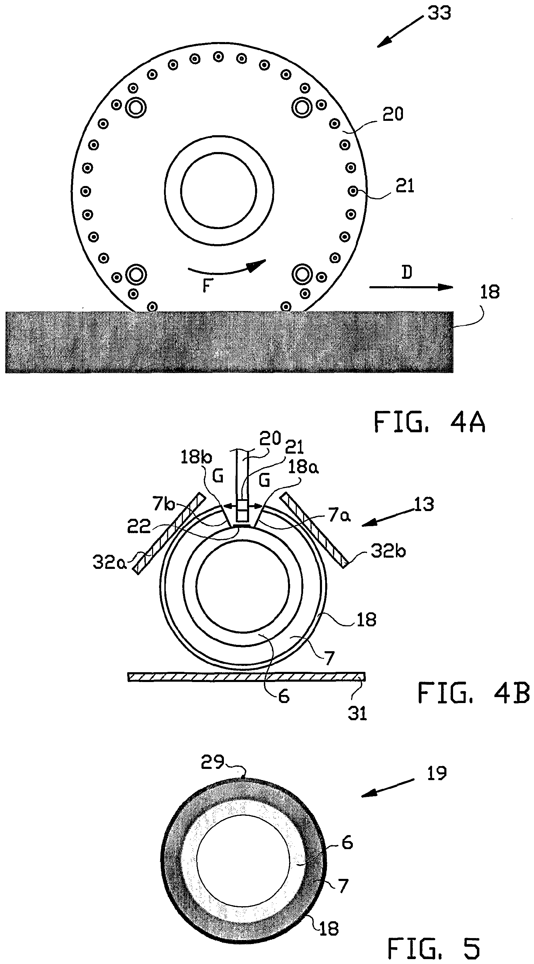

Downstream of the location of joining a seal device 33 is situated, in set-up as shown in figures 4A,B. For a description of the seal device 33 reference is made to the discussion of those figures.

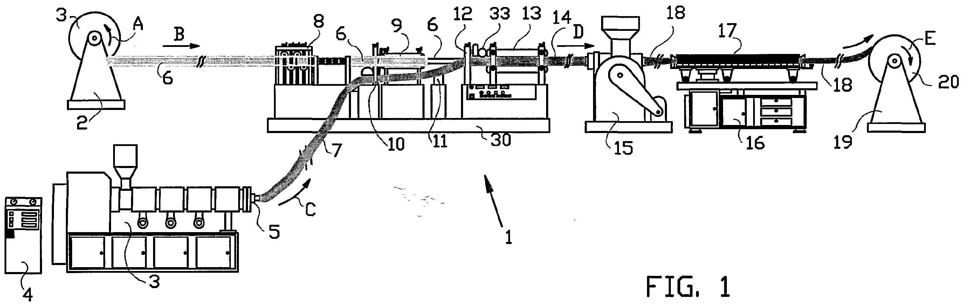

Immediately downstream of it pressing means 13 is situated (also see the discussion of the figures 4A,B) in which the casing 7 is closed and from which the assembled pipe/casing 14 comes in order to enter extruder 15 in the direction D. In extruder 15 an outer layer 18 is co-extruded over the casing 7. In case of the arrangement of figure 1 this is a relatively thick layer (for instance 0.5 mm), which may form a separate sleeve. Said sleeve 18 is then engaged in the forming station 16, in which circumferential ribs are formed extending around the entire circumference, by means of two circumferential rib formers 17. The assembled final product 19 is rolled up in the direction E on a reel 20 on holder 19. The reel 20 can be stored and then dispatched to a location of the installation activities.

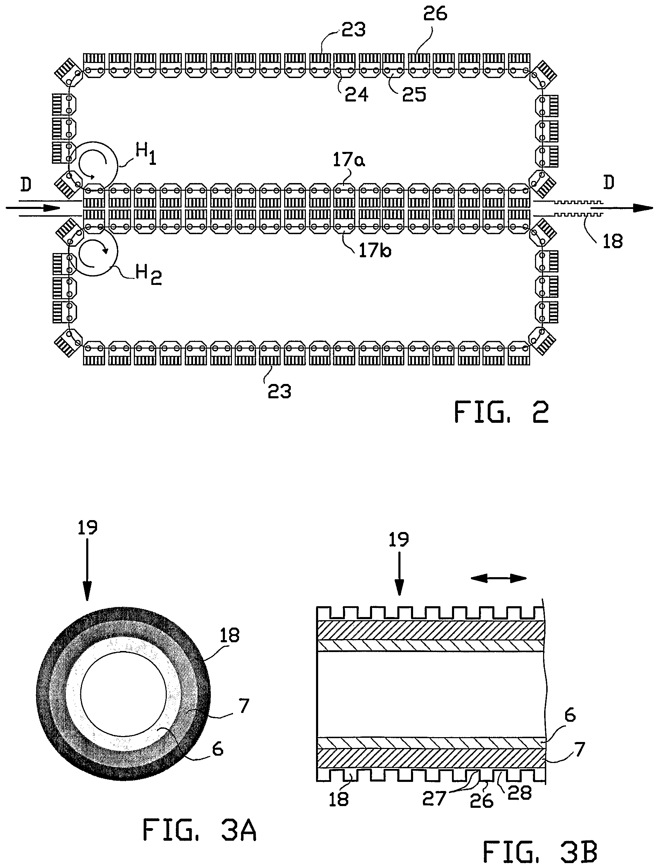

In the figure 2 the rib formers 17 are shown in top view. It here regards two rib formers 17a, 17b, travelling around in the directions H1 and H2, respectively. They each consist of chains 24, that are circumferentially driven, and on which rib forming shackles 23 have been arranged. The rib forming shackles 23 connect to each other and each consists of a holder 25 having form ribs 26. Said form ribs 26 are semicircular convex and teeth-shaped, in order to be able to form the profile shown on the righthand side of figure 2. The form ribs 26 of shackles 23 of the rib formers 27a,b running opposite each other, are contiguous to each other.
The final product is shown in the figures 3A and 3B, in which it can be seen that in the middle a pipe 6 made of synthetic material or copper is present and surrounding it a casing of polyolefin foam ((H) CFK free and shrink-free), for instance polythene foam 7, around it a rib-shaped sleeve 18. The rib-shaped sleeve 18 is more or less battlement-shaped in cross-section, having rib-shaped elevations 26 and channels 28. The material used is thermoplastic synthetic material, such as polyolefin, for instance polyethene, or PVC, and the sleeve 18 may at least deform in axial direction by folding at the location of the vertex areas 27, so that the length of the sleeve 18 becomes larger or smaller, as the fitter desires. Here the casing 7 is abutting but separate with respect to the sleeve 18, so that its shortening or lengthening can take place without too much trouble. The casing 7 can be tightly arranged around the pipe 6.

It is also possible , but not part of the invention, to use the arrangement of figure 1 without deploying forming station 16. This can for instance be when a smooth foil is chosen as outer layer, which is profoundly connected to it over the entire circumference and tightly surrounds it. In that case a thin polyolefin coating, for instance a polyethene coating, is arranged on the casing 7 in the extruder 15, and the product then obtained is rolled in stock.

It is also possible , but not part of the invention, couple the extruder 15 coaxially to the extruder 3. In that case the casing 7 when joining with the pipe 6 will already have been provided with a coating -connected to it over the entire surface-which fits snugly on it. In that case as well a seal device 33 will be positioned in the station 30 downstream of the location of joining, now not only to seal the casing 7 but also the foil/coating. In this example use can be made of the arrangement 33 shown on he figures 4A and 4B, where a disk 20 is shown, that is driven in the direction F, in order to thus run along at its circumference in the direction D of the assembled tube, of which the outer layer 18 is shown here. The disk 20 is provided with a circumferential series of holes 21 on both sides, which holes are connected to adjustable supply means for heated air which means are not further shown. The disk 20 is suspended from a frame that is not further shown, in which also a foot 22 is attached, that extends underneath disk 20, as schematically shown in figure 4B. Said foot 22 is in contact with the upper surface of the pipe 6 in order to place the disk 20, particularly the holes 21 situated in its lowermost area, at the correct distance above the pipe 6. The distance between the foot and the disk is adjustable.

In operation the heated air is allowed out of the holes 21 in the direction G to either side, exactly on the end edges 18a, 18b of the foil 18 and the edges 7a, 7b of the casing 7. The pipe 6 here remains untouched, shielded by the foot 22 and remains undamaged. The surrounding parts of the machine, not further shown here, that engage the rest of the assembled tube for transport, can be cooled here.

Immediately downstream of the disk 20 pressing means 13 with transporting pressing belts 31, 32a, 32b has been positioned, which according to a triangular arrangement engage the assembled tube and exert pressing forces on it to press the edges 7a and 7b of the casing 7 and the edges 18a, 18b of the film layer 18 against each other. The edges 18a,18b and also the edges 7a,7b of the casing 7 fuse together here, so that a circumferentially closed insulation tube is obtained that will not open in bends.

The flat embodiment of among others the pressing belt 31 also makes it possible to process other profiles, for instance with a flat lower side.

After having been treated such, the final product 19 shown in figure 5 can be obtained, where a pipe, particularly a copper pipe, is surrounded by a polyethene foam casing 7, which in turn is coated with a polyolefin film 18, that has been welded at the location of 29.

## Claims

1. Method for manufacturing an assembly of a heat-insulation tube and at least a pipe (6) accommodated therein for transport of fluid, in which in a continuous consecutive series of process steps the pipe (6) is supplied, which pipe may for instance be made of synthetic material or metal, a casing (7) of synthetic insulation foam material is extruded in which the casing is provided with a longitudinal cut and is arranged around the pipe from aside, whereafter the casing is closed at the location of the longitudinal cut, for instance by means of fusing, before a sealing outer layer (18) is co-extruded on the casing **characterized in that** the sealing outer layer (18) is arranged as a sleeve on the casing in the state it is after closing the longitudinal cut and **in that** the sleeve is formed with circumferential ribs by means of two or more rib formers (17) formed by shaping bands (23-26) circumferentially driven along with the sleeve and positioned diametrically opposite each other and engaging and stably deforming the sleeve (18) towards the casing.

2. Method according to claim 1, wherein the assembly of pipe (6), casing (7) and outer layer (18) thus obtained is rolled-up in a continuous movement and is stored as a roll.

3. Method according to claim 1 or 2, in which the circumferential ribs (26) and the outer layer (28) situated in between them are realised in manner that they can be axially pushed in.

4. Method according to any one of the preceding claims, in which the outer layer (18) is made of a thermoplastic material such as poly olefin, such as polyethylene, or PVC.

5. Method according to any one of the preceding claims, in which the casing (7) is made of poly olefin foam.

6. Method according to any one of the preceding claims, in which the sleeve (18) is arranged abutting and detached from the casing (7).

7. Assembly (1) for carrying out the method according to any one of the preceding claims, comprising a stock of pipe (6), first transport means (9) for transporting the pipe from the stock in process direction to subsequent processing stations, an extruder (3) for extruding an insulation casing (7) of synthetic foam material, second transport means (10) for leading the insulation casing from the extruder to the pipe downstream of its stock, means (12, 13) for providing a longitudinal cut in the casing, and for arranging the insulation casing around the pipe from aside and closing the longitudinal cut during continuous transport of both, means for arranging an outer layer (18) around the insulation casing (7) in the state it is after closing the cut, means (17) for arranging circumferential ribs in the outer layer and means (19) for taking up the assembled pipe thus obtained on a supply roll, in which the means (17) for arranging the circumferential ribs comprises two or more rib formers (17) radially engaging the outer layer, which rib formers are formed by shaping bands (23-26) circumferentially driven along with the outer layer, in which two rib formers are positioned radially opposite each other to engage and deform the outer layer over the entire circumference.

## Patentansprüche

1. Verfahren zur Herstellung einer Anordnung aus einer wärmeisolierenden Röhre und mindestens eines darin aufgenommenen Rohrs (6) zum Transport eines Fluids, in welchem in einer kontinuierlichen aufeinanderfolgenden Serie von Verfahrensschritten das Rohr (6) zugeführt wird, wobei das Rohr zum Beispiel aus synthetischem Material oder Metall gemacht sein kann, ein Gehäuse (7) aus synthetischen isolierenden Schaummaterial extrudiert wird, in welchem das Gehäuse mit einem longitudinalen Schnitt versehen wird und um das Rohr von einer Seite angeordnet wird, wonach das Gehäuse an dem Ort des longitudinalen Schnittes verschlossen wird, zum Beispiel mittels Verschmelzen, bevor eine dichtende äußere Schicht (18) an dem Gehäuse koextrudiert wird, **dadurch gekennzeichnet, dass** die dichtende äußere Schicht (18) als ein Schlauch an dem Gehäuse angeordnet wird, in dem Zustand, in dem es sich nach einem Verschließen des longitudinalen Schnittes befindet, und dadurch, dass der Schlauch mit Umfangsrippen mittels von zwei oder mehr Rippenformern (17) ausgebildet wird, welche durch Formungsbänder (23-26) ausgebildet sind, welche zusammen mit dem Schlauch umfänglich angetrieben werden und welche diametral gegenüberliegend zueinander positioniert sind und welche an dem Schlauch (18) angreifen und dauerhaft den Schlauch (18) in Richtung des Gehäuses deformieren.

2. Verfahren nach Anspruch 1, wobei die so erhaltene Anordnung aus Rohr (6), Gehäuse (7) und äußerer Schicht (18) in einer kontinuierlichen Bewegung aufgerollt wird und als eine Rolle gelagert wird.

3. Verfahren nach Anspruch 1 oder 2, in welchem die Umfangsrippen (26) und die zwischen ihnen gelegene äußere Schicht (28) in einer Art realisiert sind, dass sie axial eingedrückt werden können.

4. Verfahren nach einem der vorhergehenden Ansprüche, in welchem die äußere Schicht (18) aus einem thermoplastischen Material, wie zum Beispiel Polyolefin, wie zum Beispiel Polyethylen oder PVC gemacht ist.

5. Verfahren nach einem der vorhergehenden Ansprüche, in welchem das Gehäuse (7) aus einem Polyolefinschaum gemacht ist.

6. Verfahren nach einem der vorhergehenden Ansprüche, in welchem der Schlauch (18) angrenzend an und getrennt von dem Gehäuse (7) angeordnet ist.

7. Anordnung (1) zum Ausführen des Verfahrens nach einem der vorhergehenden Ansprüche, umfassend ein Lager eines Rohrs (6), ein erstes Transportmittel (9) zum Transportieren des Rohrs von dem Lager in einer Verarbeitungsrichtung zu folgenden Verarbeitungsstationen, einen Extruder (3) zum Extrudieren eines isolierenden Gehäuses (7) aus synthetischem Schaummaterial, ein zweites Transportmittel (10) zum Führen des isolierenden Gehäuses von dem Extruder zu dem Rohr stromabwärts von seinem Lager, ein Mittel (12, 13) zum Vorsehen eines longitudinalen Schnittes in dem Gehäuse, und zum Anordnen des isolierenden Gehäuses um das Rohr von einer Seite und zum Verschließen des longitudinalen Schnittes während eines kontinuierlichen Transports von beiden, ein Mittel zum Anordnen einer äußeren Schicht (18) um das isolierende Gehäuse (7) in dem Zustand, in dem es sich nach einem Verschließen des Schnittes befindet, ein Mittel (17) zum Anordnen von Umfangsrippen in der äußeren Schicht und ein Mittel (19) zum Aufnehmen des so erhaltenen zusammengesetzten Rohres an einer Zuführungsrolle, in welcher das Mittel (17) zum Anordnen der Umfangsrippen zwei oder mehr Rippenformer (17) umfasst, welche radial an der äußeren Schicht angreifen, wobei die Rippenformer durch Formungsbänder (23-26) ausgebildet sind, welche zusammen mit der äußeren Schicht umfänglich angetrieben werden, in welcher zwei Rippenformer radial gegenüberliegend zueinander positioniert sind, um über den gesamten Umfang an der äußeren Schicht anzugreifen und um die äußere Schicht zu deformieren.

## Revendications

1. Procédé de fabrication d'un ensemble d'un tube d'isolation thermique et d'au moins un tuyau (6) logé dans celui-ci pour le transport de fluide, dans lequel dans une série consécutive continue d'étapes de processus, le tuyau (6) est fourni, lequel tuyau peut par exemple être constitué de matériau synthétique ou de métal, une enveloppe (7) en matériau de mousse d'isolation synthétique est extrudée, l'enveloppe étant dotée d'une découpe longitudinale et étant agencée autour du tuyau par le côté, après quoi l'enveloppe est fermée à l'emplacement de la découpe longitudinale, par exemple au moyen d'une fusion, avant qu'une couche extérieure d'étanchéité (18) soit coextrudée sur l'enveloppe, **caractérisé en ce que** la couche extérieure d'étanchéité (18) est agencée comme un manchon sur l'enveloppe dans l'état où elle est après fermeture de la découpe longitudinale et **en ce que** le manchon est formé avec des nervures circonférentielles au moyen de deux unités de formation de nervures (17) ou plus formées par des bandes de façonnage (23 à 26) entraînées circonférentiellement avec le manchon et positionnées diamétralement opposées l'une à l'autre et enclenchant et déformant de façon stable le manchon (18) vers l'enveloppe.

2. Procédé selon la revendication 1, dans lequel l'ensemble du tuyau (6), de l'enveloppe (7) et de la couche extérieure (18) ainsi obtenu est enroulé en un mouvement continu et est stocké sous forme de rouleau.

3. Procédé selon la revendication 1 ou 2, dans lequel les nervures circonférentielles (26) et la couche extérieure (28) située entre elles sont réalisées de manière à pouvoir être poussées axialement.

4. Procédé selon l'une quelconque des revendications précédentes, dans lequel la couche extérieure (18) est constituée d'un matériau thermoplastique tel qu'une polyoléfine, comme le polyéthylène, ou le PVC.

5. Procédé selon l'une quelconque des revendications précédentes, dans lequel l'enveloppe (7) est constituée de mousse de polyoléfine.

6. Procédé selon l'une quelconque des revendications précédentes, dans lequel le manchon (18) est agencé en butée et détaché de l'enveloppe (7).

7. Ensemble (1) pour réaliser le procédé selon l'une quelconque des revendications précédentes, comprenant un stock de tuyaux (6), un premier moyen de transport (9) pour transporter le tuyau provenant du stock en direction du processus vers des stations de traitement ultérieures, une extrudeuse (3) pour extruder une enveloppe d'isolation (7) en matériau de mousse synthétique, un second moyen de transport (10) pour mener l'enveloppe d'isolation de l'extrudeuse au tuyau en aval de son stock, des moyens (12, 13) pour fournir une découpe longitudinale dans l'enveloppe, et pour agencer l'enveloppe d'isolation autour du tuyau par le côté et fermer la découpe longitudinale pendant le transport en continu des deux, un moyen pour agencer une couche extérieure (18) autour de l'enveloppe d'isolation (7) dans l'état où elle est après fermeture de la découpe, un moyen (17) pour agencer des nervures circonférentielles dans la couche extérieure et un moyen (19) pour enrouler le tuyau assemblé ainsi obtenu sur un rouleau d'alimentation, dans lequel les moyens (17) pour agencer les nervures circonférentielles comprennent deux unités de formation de nervures (17) ou plus enclenchant radialement la couche extérieure, lesquelles unités de formation de nervures sont formées par des bandes de façonnage (23 à 26) entraînées circonférentiellement avec la couche extérieure, dans lequel deux unités de formation de nervures sont positionnées radialement opposées l'une à l'autre pour enclencher et déformer la couche extérieure sur toute la circonférence.
